Europäisches Patentamt

European Patent Office

Office européen des brevets

(19)

(11) Veröffentlichungsnummer : **0 143 743**
**B1**

(12) **EUROPÄISCHE PATENTSCHRIFT**

(45) Veröffentlichungstag der Patentschrift :
04.03.87

(21) Anmeldenummer : 84810512.6

(22) Anmeldetag : 22.10.84

(51) Int. Cl.⁴ : **H 01 S   3/10, B 23 K  26/04,**
**G 02 B   5/00, G 02 B  26/02,**
**G 02 B  26/04**

(54) **Laserbearbeitungsvorrichtung.**

(30) Priorität : 26.10.83 CH 5848/83

(43) Veröffentlichungstag der Anmeldung :
05.06.85 Patentblatt 85/23

(45) Bekanntmachung des Hinweises auf die Patenterteilung : 04.03.87 Patentblatt 87/10

(84) Benannte Vertragsstaaten :
CH DE FR GB IT LI

(56) Entgegenhaltungen :
WO-A-81/029 53
FR-A- 2 377 662
US-A- 3 426 293
US-A- 3 689 159
US-A- 3 940 712
US-A- 4 283 115

(73) Patentinhaber : GRETAG Aktiengesellschaft
Althardstrasse 70
CH-8105 Regensdorf (CH)

(72) Erfinder : Kunz, Rino E., Dr.
Im.Schibler 18
CH-8162 Steinmaur (CH)
Erfinder : Murbach, Urs
Hardstrasse 41
CH-5432 Neuenhof (CH)
Erfinder : Huber, Ernst
Märzengasse 68c
CH-5430 Wettingen (CH)

(74) Vertreter : Pirner, Wilhelm et al
Patentabteilung der CIBA-GEIGY AG Postfach
CH-4002 Basel (CH)

## Beschreibung

Die Erfindung betrifft eine Vorrichtung zur Bearbeitung eines Werkstücks mittels eines Laserstrahls gemäss Oberbegriff von Patentanspruch 1.

Bei der Lasermaterialbearbeitung stellt sich oft das Problem, dass man für gewisse Arbeiten (z. B. Beschriften, Trimmen etc.) einen Strahl hoher Intensität, für andere Bearbeitungen (z. B. Löten etc.) jedoch einen Strahl mit hoher Leistung benötigt.

Ueblicherweise verwendet man deshalb verschiedene Laser und optische Anordnungen bzw. man rüstet eine bestehende Anlage von Hand um. Zur optimalen Anpassung der Strahlparameter (z. B. Strahldurchmesser auf dem Werstück und Leistung) ist es allgemein notwendig, optische Komponenten sowohl im Inneren des Laserresonators (z. B. Modenblenden, Linsen) als auch ausserhalb des Resonators (z. B. Strahlaufweiter, Linsen, Blenden, Filter) zu montieren, auszuwechseln bzw. zu verstellen.

Sollen jedoch z. B. auf ein- und demselben Werkstück verschiedene Bearbeitungen durchgeführt werden, für die unterschiedliche Strahlparameter erforderlich sind, so dauern die Umrüstzeiten in vielen Fällen zu lang. Ausserdem ist das Umrüsten von Hand umständlich und oft gefährlich (Laserstrahlung, elektrische Spannungen).

Durch die Erfindung soll nun dieser Mangel behoben und eine Laserbearbeitungsvorrichtung der zur Rede stehenden Art dahingehend verbessert werden, dass ein ferngesteuertes, maschinelles Umrüsten für verschiedene Anwendungsfälle möglich ist. Insbesondere soll die Variation der transversalen Modenverteilung vereinfacht werden.

Die dieser Aufgabe gerecht werdende erfindungsgemässe Vorrichtung ist in Patentanspruch 1 beschrieben. Besonders vorteilhafte und zweckmässige Ausführungsformen ergeben sich aus den abhängigen Ansprüchen.

Die erfindungsgemässe Vorrichtung ist also mit einer servogesteuert verstellbaren Modenblende zur Beeinflussung der transversalen Modenverteilung ausgerüstet. Eine äusserlich ähnliche, in ihrer Zweckbestimmung und Funktion jedoch grundsätzlich verschiedene verstellbare Modenblende wird bei einem in US-PS 3 689 293 beschriebenen Gaslaser eingesetzt. Sie hat dort die Aufgabe der Frequenzabstimmung des grundsätzlich und ausschliesslich im niedrigsten Transversalmode schwingenden Gas-Lasers. Das Problem der Veränderung der transversalen Modenverteilung stellt sich bei diesem Laser überhaupt nicht.

In US-PS 3 940 712 ist ein spezieller Modulator für einen Lasergenerator beschrieben, mit welchem die Frequenz bzw. Phase der Laserschwingungen variiert werden kann. Der Modulator besteht aus einem in den Laser-Resonator eingefügten totalreflektierenden Prisma, an dessen Basisfläche parallel im Abstand ein Spiegel angeordnet ist, wobei der Abstand zwischen Spiegel und Basisfläche piezoelektrisch verstellt werden kann. Dieser Modulator beeinflusst die wirksame Resonatorlänge und damit die Frequenz bzw. Phasenlage der Laser-Schwingungen. Er ist jedoch nicht dazu geeignet, die Modenverteilung, insbesondere die der transversalen Moden, zu verändern.

In WO 81/02953 (veröffentlichte PCT-Patentanmeldung Publ. No. WO 81/02953) ist ein Wellenleiter-Laser beschrieben, der mit einem Umlenk-Prisma zur Faltung des Strahlenganges ausgerichtet ist. In einer der Katheten-Flächen des Umlenk-Prismas ist parallel im Abstand ein weiteres Prisma angeordnet, wobei der Abstand veränderbar ist. Durch die Veränderung dieses Abstandes lässt sich die Güte der Laserschwingung beeinflussen, zur Modenvariation ist diese Anordnung jedoch nicht geeignet.

Im folgenden wird die Erfindung anhand der Zeichnung näher erläutert. Es zeigen :

Figur 1 eine schematische Gesamtdarstellung eines Ausführungsbeispiels einer erfindungsgemässen Laserbearbeitungsvorrichtung,

Figuren 2a und 2b eine schematische Detailansicht in zwei verschiedenen Arbeitsstellungen,

Figur 3 einen Schrägriss eines konkreten Ausführungsbeispiels des Details aus Fig. 2a und 2b und

Figur 4 bis 7 schematische Darstellungen weiterer Detailvarianten.

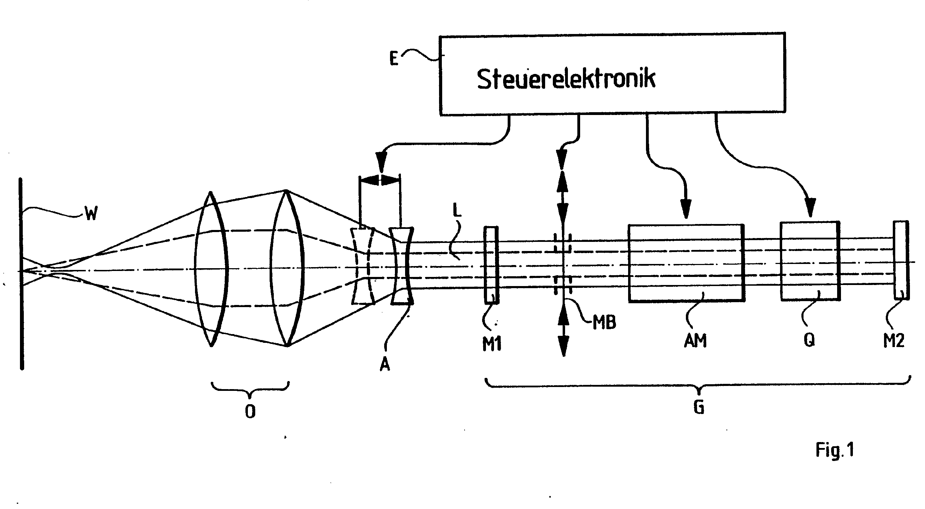

Die wesentlichsten Bestandteile einer erfindungsgemässen Laserbearbeitungsvorrichtung sind Fig. 1 zu entnehmen. Es sind dies ein Lasergenerator G zur Erzeugung eines Laserstrahls L, eine Optik O zur Fokussierung des Laserstrahls auf ein Werkstück W, ein Strahlenaufweiter A und eine den Generator G und den Strahlenaufweiter A steuernde Steuerelektronik E.

Der Lasergenerator G besteht aus einem durch zwei Spiegel $M_1$ und $M_2$ definierten Resonator, einem aktiven Medium AM, einem Güteschalter (Q-Switch) Q und einer Modenblende MB.

Die dargestellte Vorrichtung entspricht soweit dem Stand der Technik und bedarf daher keiner weiteren Erläuterung. Im Unterschied zu bekannten Vorrichtungen dieser Art sind jedoch bei der erfindungsgemässen Vorrichtung die Modenblende MB und bei einer besonderen Ausführungsart der Erfindung auch der Strahlenaufweiter A nicht fest montiert bzw. eingestellt, sondern über hier nur durch Pfeile angedeutete Servomittel in ihrer Wirkung veränder- bzw. verstellbar ausgebildet. Auf diese Weise lassen sich die Strahlparameter via Steuerelektronik einfach und schnell den unterschiedlichsten Betriebserfordernissen anpassen.

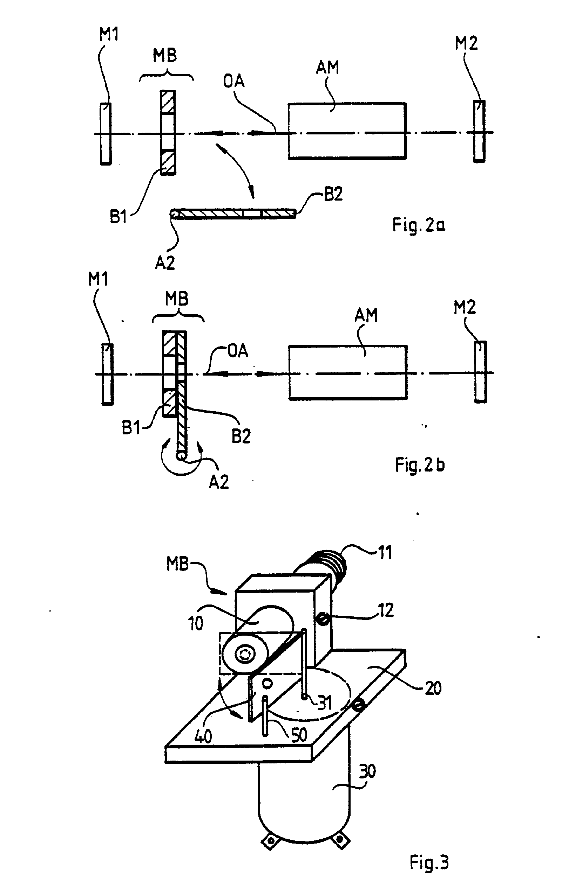

Die prinzipielle Realisation einer verstellbaren Modenblende MB geht z. B. aus den Fig. 2a und 2b hervor. Wie man erkennt, besteht die Modenblende MB aus einem feststehenden, permanent im Strahlengang befindlichen Blendenteil $B_1$ und

einem in den Strahlengang einschwenkbaren, beweglichen Blendenteil $B_2$, dessen Drehachse $A_2$ die optische Achse OA des Systems senkrecht kreuzt bzw. parallel zur oder in der Ebene des beweglichen Blendenteils $B_2$ liegt. Bei ausgeschwenktem Blendenteil $B_2$ (Fig. 2a) ergibt sich ein grosser Strahlquerschnitt, bei eingeschwenktem Blendenteil $B_2$ (Fig. 2b) ein entsprechend kleinerer.

Fig. 3 zeigt eine praktische Ausführungsform einer veränderbaren Modenblende MB. Der feststehende Blendenteil ist in konventioneller Weise als Rohr 10 mit Gewindestutzen 11 ausgebildet, das in einer nicht gezeigten Justierhalterung eingeschraubt ist. Am Rohr 10 ist ein Haltewinkel 20 befestigt und mit Madenschrauben 12 fixiert. Im Haltewinkel 20 ist ein Gleichstrommotor 30 befestigt, dessen Welle 31 eine Lamelle 40 trägt, welche den beweglichen Blendenteil $B_2$ bildet. Ein Anschlagstift 50 begrenzt die Schwenkbewegung der Lamelle 40 in Richtung vom Rohr 10 weg. Durch Beaufschlagen des Elektromotors 30 mit elektrischer Spannung der einen oder der anderen Polarität kann die Lamelle 40 in den Strahlengang vor das Rohr 10 geschwenkt bzw. aus diesem heraus geschwenkt werden. Bei entsprechender Wahl des Motors kann dies z. B. sehr einfach mittels TTL-Signalen erfolgen.

Die besonderen Vorteile einer variablen Modenblende MB gemäss Fig. 3 sind:

direkter Ersatz für bisher übliche fixe Blenden ohne Aenderungen an bestehenden üblichen Halterungen unter Beibehaltung der Justiermöglichkeiten,

exakte Positionierung ohne mechanische Anschläge, die sich durch Gebrauch abnutzen könnten,

Abführung der Verlustleistung von der dünnen Blenden-Lamelle auf die im Haltewinkel eingeschraubte massive Fest-Blende,

kompakte, einfache Konstruktion,

weiches Arbeiten durch Verwendung eines Gleichstrommotors, wobei die Charakteristik der Bewegung/Beschleunigung durch die Art der elektrischen Ansteuerung einfach wählbar ist.

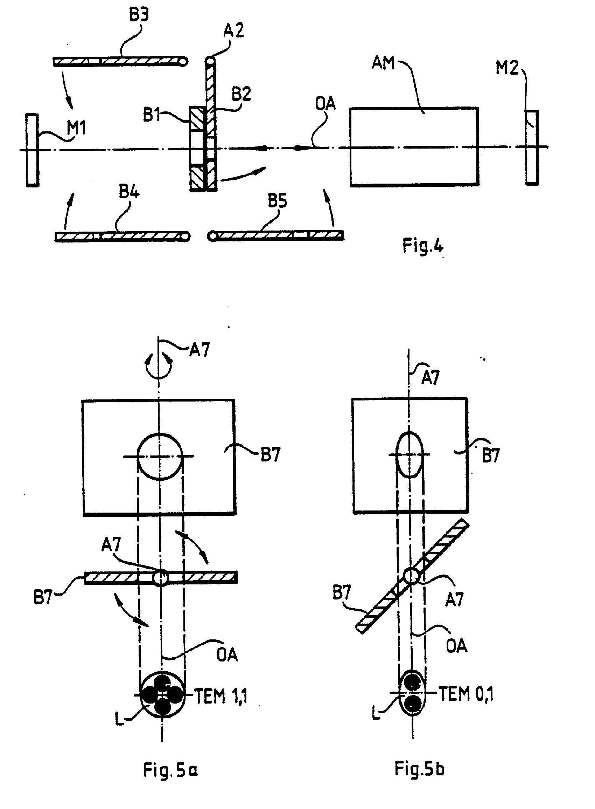

Wie Fig. 4 zeigt, ist es ohne weiteres auch möglich, mehrere bewegliche Blendenteile $B_2$, $B_3$, $B_4$, $B_5$ vorzuziehen und damit eine grössere Vielzahl der Blendeneinstellungen zu erreichen.

Statt einzelner Blenden können jedoch auch ein Blendenrevolver (Rad mit verschiedenen Blenden) oder kontinuierlich verstellbare Blenden (Iris-Blenden) verwendet werden. Aufgrund der sehr kritischen Stabilität und Präzision der Lage der Blende sind solche Konstruktionen jedoch aufwendiger. Zudem ist das Problem der Kühlung bei Hochleistungslasern dann schwieriger zu lösen.

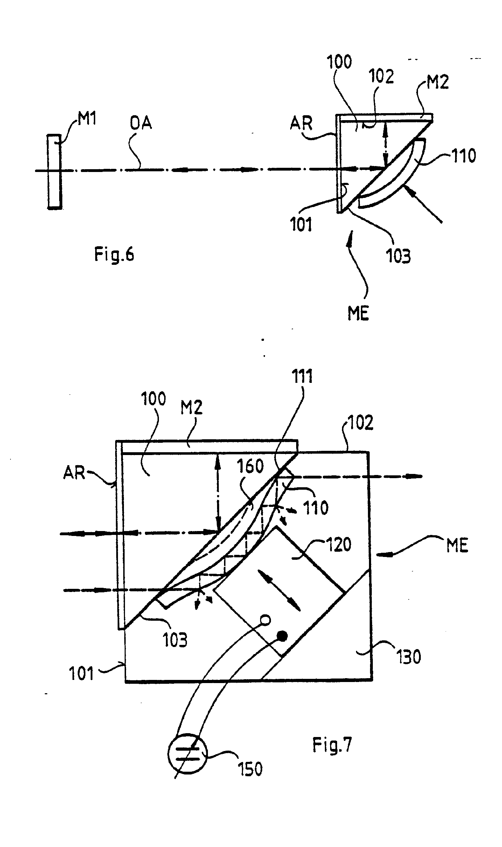

Eine weitere Möglichkeit zur Selektion verschiedener transversaler Moden des Lasers zeigen Fig. 5a und 5b. Hier wird eine Blende $B_7$ um eine in ihrer Ebene liegende und die optische Achse OA des Systems schneidende Schwenkachse $A_7$ gedreht und damit der effektive Strahlquerschnitt verändert. In der Fig. 5a gezeigten Drehstellung ergibt sich z. B. ein Laserstrahl mit $TEM_{1,1}$-Mode, in der Stellung gemäss Fig. 5b ein solcher mit $TEM_{0,1}$-Mode.

In gewissen Fällen soll die Strahlbeeinflussung schnell, kontinuierlich und wenn möglich ohne grosse mechanische Bewegungen erfolgen. Dies lässt sich durch die in Fig. 6 und 7 dargestellte Ausbildungsvariante erreichen, bei der die variable Modenblende MB im Resonator durch ein den sogenannten optischen Tunneleffekt ausnutzendes, räumliches Lichtmodulatorelement (SLM = spatial light modulator) ME ersetzt ist.

Dieses Modulatorelement ME besteht im wesentlichen aus einem totalreflektierenden Umlenkprisma 100, dessen eine Seitenfläche 101 senkrecht und dessen andere Seitenfläche 102 parallel zur optischen Achse OA des Laserresonators ausgerichtet ist. Die senkrechte Seitenfläche 101 ist mit einem Antireflex-Belag AR versehen, die parallele Seitenfläche 102 trägt den Resonatorspiegel M2.

An der Basisfläche 103 des Umlenkprismas 100 ist eine konkave, für die Laserstrahlung transparente Platte 110 aus einem elastisch etwas deformierbaren Material (z. B. Glas) vorgesehen. Diese Platte 110 wird mittels eines piezo-elektrischen Verstellelements 120, das sich auf einem Gegenlager 130 abstützt, gegen die Basisfläche 103 des Prismas 100 gepresst, so dass es längs seines Rands 111 auf der Basisfläche 103 aufliegt. Das piezo-elektrische Verstellelement 120 ist an eine einstellbare Spannungsquelle 150, die in der Praxis durch die Steuerelektronik E gebildet ist, angeschlossen. Je nach anliegender Spannung drückt dann das piezoelektrische Verstellelement 120 die Platte 110 mehr oder weniger stark an das Umlenkprisma 100 an. Dabei verändert sich der Luftspalt 160 zwischen der konkaven Seite der Platte 110 und der Basisfläche 103 und verändert damit die Modenverteilung des Laserstrahls.

Das Modulatorelement ME arbeitet nach dem Prinzip der frustrierten Totalreflexion, auch optischer Tunneleffekt genannt. Wäre nur das Prisma vorhanden, würde der Laserstrahl an dessen Basisfläche total reflektiert werden. Die dabei an der Basisfläche angeregte «quergedämpfte Welle» kann aus elektrodynamischen Gründen nicht in das optisch dünnere Medium abgestrahlt werden. Wird nun aber die Platte 110 der Basisfläche genähert, so wird die Oberflächenwelle beeinflusst und kann einen Teil ihrer Energie in die angenäherte Platte abstrahlen. Dadurch wird die einfallende Welle nicht mehr total reflektiert, sondern nur noch zu einem Bruchteil, der vom Abstand der Platte abhängt. Durch Steuerung des Plattenabstands ist somit eine Modulation der Welle möglich.

Bei der Erfindung wird keine ebene, sondern eine konkave Platte 100 benützt, so dass der Luftspalt als Funktion des Ortes variert. Im zentralen Bereich der Prisma-Basisfläche, wo der Abstand zur Platte 100 relativ gross ist, ist auch das Reflexionsvermögen so gross, dass eine Laseremission stattfinden kann. Dieser Bereich entspricht der freien Oeffnung bei einer konventionellen Modenblende. Das Modulatorelement ME entspricht daher einer elektrisch stufenlos einstellbaren Blende zur Modenselektion eines Lasers.

Die Form der effektiven « Oeffnung » dieses Modenselektors kann variiert werden z. B. durch die Form der angenäherten Platte durch die Gestaltung des mechanischen Uebergangs zwischen piezoelektrischem Element und der Rückseite der Platte, durch die Gestaltung des Prismas, oder mittels zusätzlicher Elemente im Laserresonator (z. B. Zylinderlinsen). Es versteht sich im übrigen auch, dass die Platte nicht unbedingt in direktem Kontakt mit der Basisfläche des Prismas sein muss, sondern bei geeigneter Formgebung auch im Abstand davon angeordnet sein kann.

Zur weiteren Anpassung an die Art der mit der Vorrichtung durchzuführenden Bearbeitung kann der Laserstrahl L ausserhalb des Resonators mittels adaptiv-optischer Elemente transformiert werden, vorzugsweise gekoppelt mit den Strahlmanipulationen innerhalb des Resonators. Beispiele solcher adaptivoptischer Elemente sind motorisch verschiebbare optische Komponenten (Linsen, Spiegel, Gitter, Prismen, Hologramme, Blenden) und elektrisch steuerbare optische Elemente (Flüssigkristallzellen, deformierbare Spiegel und andere Elemente, räumliche und zeitliche Lichtmodulatoren, Abschwächer etc.). In Fig. 1 ist stellvertretend für alle diese Möglichkeiten nur die Vorstellbarkeit des Gauss'schen Strahlaufweiters A angedeutet. Wesentlich für eine optimale Anpassung der Strahlparameter ist jedoch in jedem Fall, dass die entsprechenden Manipulationen innerhalb des Resonators vorgenommen werden. Eine Aenderung der optischen Komponenten ausserhalb des Resonators allein führt in der Regel nicht zu befriedigenden Ergebnissen.

Durch die vorstehend beschriebene Erfindung werden also veränderbare moden-selektive Mittel im Resonator bereitgestellt, die die servogesteuerte Anpassung der Strahlparameter (Modenstruktur, Divergenz, Strahldurchmesser, Leistung) für den jeweiligen Betriebsfall via Computer ermöglichen.

**Patentansprüche**

1. Vorrichtung zur Bearbeitung eines Werkstücks mittels eines Laserstrahls mit einem Resonator umfassenden Generator (G) zur Erzeugung des Laserstrahls (L), im Resonator angeordneten modenselektiven Mitteln (MB) zur Beeinflussung der transversalen Modenverteilung, einer Optik (O) zur Fokussierung des Laserstrahls auf das Werkstück und ausserhalb des Resonators befindlichen optischen Komponenten (A) zur Beeinflussung der Strahlparameter, dadurch gekennzeichnet, dass die modenselektiven Mittel (MB) im Resonator servogesteuert bezüglich ihrer Wirkung verstellbar ausgebildet sind und dass eine elektrische Steuerung (E) zur Verstellung der modenselektiven Mittel (MB) vorgesehen ist.

2. Vorrichtung nach Anspruch 1, dadurch gekennzeichnet, dass auch die optischen Komponenten (A) ausserhalb des Resonators servogesteuert verstellbar ausgebildet sind.

3. Vorrichtung nach Anspruch 1 oder 2, dadurch gekennzeichnet, dass die modenselektiven Mittel eine in den Strahlengang um eine zu ihrer Ebene parallele Schwenkachse ($A_2$) einschwenkbare Modenblende (MB) umfassen.

4. Vorrichtung nach Anspruch 1 oder 2, dadurch gekennzeichnet, dass die modenselektiven Mittel (MB) eine feststehende Modenblende ($B_1$) und wenigstens eine bewegliche, um eine zu ihrer Ebene parallele Schwenkachse ($A_2$) in den Strahlengang einschwenkbare Modenblende ($B_2$) umfassen.

5. Vorrichtung nach Anspruch 1 oder 2, dadurch gekennzeichnet, dass die modenselektiven Mittel (MB) eine um eine die Achse des Laserstrahls schneidende Achse schwenkbare Modenblende ($B_7$) aufweisen.

6. Vorrichtung nach einem der Ansprüche 2 bis 4, dadurch gekennzeichnet, dass die bewegliche Modenblende (40) durch einen Gleichstrom-Elektromotor (30) angetrieben ist.

7. Vorrichtung nach Anspruch 1 oder 2, dadurch gekennzeichnet, dass die modenselektiven Mittel im Resonator ein elektrisch variables, nach dem Prinzip der verhinderten Totalreflexion (optischer Tunneleffekt) arbeitendes Element (ME) umfassen.

8. Vorrichtung nach Anspruch 7, dadurch gekennzeichnet, dass das Element (ME) ein totalreflektierendes Umlenkprisma (100) umfasst, an dessen einer Seitenfläche (102) unmittelbar einer der beiden Spiegel ($M_2$) des Resonators und an dessen Basisfläche (103) eine konkave, elastisch deformierbare transparente Platte (110) angeordnet ist, wobei elektrisch beeinflussbare Verstellmittel (120) vorgesehen sind, um die Platte (110) mehr oder weniger gegen die Basisfläche (103) zu pressen.

9. Vorrichtung nach Anspruch 8, dadurch gekennzeichnet, dass die Verstellmittel ein piezoelektrisches Verstellelement (120) umfassen.

**Claims**

1. Apparatus for the processing of a workpiece by means of a laser beam, comprising a generator (G) having a resonator for the production of the laser beam (L), mode selective means (MB) located in said resonator for varying the transverse mode distribution of the laser beam, an optical assembly (O) for focusing the laser beam on the workpiece and optical components (A) located outside the resonator for modifying the beam parameters, characterised in that said mode selective means (MB) in the resonator are adjustable with the aid of servo-controls to provide varied effects and that electric control means (E) are provided for adjusting the mode selective means (MB).

2. Apparatus according to claim 1, characterised in that the optical components (A) located outside the resonator are also ajustable with the aid of servo-controls.

3. Apparatus according to either of claims 1 or 2, characterised in that the mode selective means comprise a diaphragm (MB) which is pivotable into the beam path around a pivot axis ($A_2$) parallel to the plane of said diaphragm (MB).

4. Apparatus according to either of claims 1 or 2, characterised in that the mode selective means (MB) comprise a stationary diaphragm ($B_1$) and at least one movable diaphragm ($B_2$) which is pivotable into the beam path around a pivot axis ($A_2$) parallel to the plane of said movable diaphragm ($B_2$).

5. Apparatus according to either of claims 1 or 2, characterised in that the mode selective means (MB) comprise a diaphragm ($B_7$) which is pivotable around an axis which intersects the axis of the laser beam.

6. Apparatus according to any one of claims 2 to 4, characterised in that the movable diaphragm (40) is driven by a d.c. electric motor (30).

7. Apparatus according to either of claims 1 or 2, characterised in that the mode selective means (MB) comprise an electrically variable element (ME) within the resonator, which element operates on the principle of frustrated total reflection (optical tunnel effect).

8. Apparatus according to claim 7, characterised in that the element (ME) comprises a totally reflecting reversing prism (100) having one of the two mirrors ($M_2$) of the resonator located directly on one lateral side (102) thereof and a concave, elastically deformable transparent plate (110) arranged on its base surface (103), with electrically controlled adjusting means (120) being provided for pressing the plate more or less in contact with the base surface (103).

9. Apparatus according to claim 8, characterised in that the adjusting means comprise a piezoelectric adjusting element (120).

**Revendications**

1. Installation pour l'usinage d'une pièce au moyen d'un rayon laser, avec un générateur (G) comprenant un résonateur, des moyens de sélection de modes (MB) disposés dans le résonateur, pour agir sur la distribution transversale des modes, une optique (O) pour focaliser le rayon laser sur la pièce, et des composants optiques (A) situés à l'extérieur du résonateur pour agir sur les paramètres du rayon, installation caractérisée en ce que l'action des moyens de sélection de modes (MB) servo-commandés dans le résonateur est réglable et en ce qu'une commande électrique (E) est prévue pour le réglage des moyens de sélection de modes (MB).

2. Installation selon la revendication 1, caractérisée en ce que les composants optiques (A) situés à l'extérieur du résonateur sont aussi réglables par servo-commande.

3. Installation selon la revendication 1 ou 2, caractérisée en ce que les moyens de sélection de modes comprennent un diaphragme de modes (MB), insérable dans la trajectoire du rayon par pivotement autour d'un axe ($A_2$) de pivotement parallèle à son plan.

4. Installation selon la revendication 1 ou 2, caractérisée en ce que les moyens de sélection de modes (MB) comprennent un diaphragme de modes (B1) fixe et au moins un diaphragme de modes (B2) mobile, insérable dans la trajectoire du rayon par pivotement autour d'un axe de pivotement ($A_2$) parallèle à son plan.

5. Installation selon la revendication 1 ou 2, caractérisée en ce que les moyens de sélection de modes (MB) présentent un diaphragme de modes (B7) pivotable autour d'un axe coupant l'axe du rayon laser.

6. Installation selon l'une des revendications 2 ou 4, caractérisée en ce que le diaphragme mobile (40) de modes est entraîné par un moteur électrique (30) à courant continu.

7. Installation selon l'une des revendications 1 ou 2, caractérisée en ce que les moyens de sélection de modes comprennent dans le résonateur un élément (ME) électriquement variable fonctionnant, selon le principe de la réflexion totale empêchée (effet de tunnel optique).

8. Installation selon la revendication 7, caractérisée en ce que l'élément (ME) comprend un prisme déflecteur (100) à réflexion totale, près d'une surface latérale (102) duquel est accolé immédiatement l'un des deux miroirs ($M_2$) du résonateur, et près de la surface de base (103) duquel est disposée une plaque (110) transparente, concave, déformable élastiquement, des moyens de réglage (120) influençables électriquement étant prévus pour presser la plaque (110) plus ou moins contre la surface de base (103).

9. Installation selon la revendication 8, caractérisée en ce que les moyens de réglage comprennent un élément piézoélectrique (120) de réglage.

Steuerelektronik

E

M2

Q

AM

G

MB

M1

L

A

O

W

Fig.1

Fig. 2a

Fig. 2b

Fig. 3

Fig.4

Fig.5a

Fig.5b

Fig.6

Fig.7

4